# EUROPÄISCHE PATENTSCHRIFT

(11) **EP 3 943 986 B1**
(45) Veröffentlichungstag und Bekanntmachung des Hinweises auf die Patenterteilung: **31.01.2024**
(21) Anmeldenummer: 21171837.4
(22) Anmeldetag: 03.05.2021
(51) Int. Cl.: G01V 8/20, G02B 27/62, F16P 3/14

(54) **LICHTVORHANG**
LIGHT CURTAIN
RIDEAU LUMINEUX

(30) Priorität: 22.07.2020 DE 202020104211 U
(43) Veröffentlichungstag der Anmeldung: 26.01.2022
(73) Patentinhaber: Leuze electronic GmbH + Co. KG, 73277 Owen/Teck (DE)
(72) Erfinder: Feller, Bernhard, 86316 Friedberg (DE); Koperski, Joachim, 85521 Ottobrunn (DE); Aldiek, Norbert, 73230 Kirchheim/Teck (DE); Hörderich, Johann, 82291 Mammendorf (DE); Olbrich, Sebastian, 80992 München (DE)
(74) Vertreter: Ruckh, Rainer Gerhard

(56) Entgegenhaltungen:
- EP-A1- 2 985 636
- EP-A2- 0 964 273
- DE-A1-102007 023 101
- DE-B4-102006 050 189

## Beschreibung

Die Erfindung betrifft einen Lichtvorhang.

Derartige Lichtvorhänge dienen generell zur Erfassung von Objekten in einem Überwachungsbereich. Der Lichtvorhang umfasst ein Sendergehäuse mit einer Reihenanordnung von Lichtstrahlen emittierenden Sendern und ein Empfängergehäuse mit einer Reihenanordnung von Lichtstrahlen empfangenden Empfängern. Für den Arbeitsbetrieb des Lichtvorhangs sind das Sendergehäuse und Empfängergehäuse an gegenüberliegenden Rändern des Überwachungsbereichs so angeordnet, dass bei freiem Überwachungsbereich die Lichtstrahlen jeweils eines Senders ungehindert auf einen diesem Sender zugeordneten Empfänger auftreffen. Der Sender und der zugeordnete Empfänger bilden eine Strahlachse des Lichtvorhangs. In einer Auswerteeinheit wird abhängig von den Empfangssignalen der Empfänger ein Objektfeststellungssignal generiert. Vorteilhaft ist das Objektfeststellungssignal ein binäres Schaltsignal, dessen Schaltzustände angeben ob sich ein Objekt im Überwachungsbereich befindet oder nicht.

Vor Aufnahme des Arbeitsbetriebs des Lichtvorhangs müssen dessen Sendergehäuse und Empfängergehäuse zueinander ausgerichtet werden, wobei zunächst eine Ausrichtung des Sendergehäuses erfolgt, und anschließend das Empfängergehäuse zu dem Sendergehäuse ausgerichtet wird.

Diese Ausrichtung, insbesondere die Ausrichtung des Sendergehäuses ist einerseits dadurch erschwert, dass die Sender des Lichtvorhangs typischerweise Lichtstrahlen im Infrarotbereich, das heißt im nicht sichtbaren Wellenlängenbereich emittieren.

Eine weitere Schwierigkeit besteht darin, dass die Sender Lichtstrahlen in einem eng begrenzten Abstrahlwinkel emittieren und die Empfänger entsprechend eng begrenzte Sichtwinkel aufweisen. Damit wird der Lichtvorhang unempfindlicher gegen Störeinflüsse. Dazu gehören insbesondere Umspiegelungen, das heißt Reflexionen der Lichtstrahlen an einem außerhalb des Überwachungsbereichs angeordneten Objekt zu einem der Empfänger, wodurch ein freier Überwachungsbereich vorgetäuscht werden kann, obwohl sich ein Objekt im Überwachungsbereich befindet.

Für den Fall, dass der Lichtvorhang als Sicherheitssensor ausgebildet ist und im Bereich der Sicherheitstechnik, insbesondere des Personenschutzes eingesetzt wird, müssen die Abstrahlwinkel und Sichtwinkel den normativen Anforderungen der geltenden Sicherheitsnormen genügen. Dies bedeutet, dass die Abstrahlwinkel und Sichtwinkel in bestimmten Anwendungen maximal ± 2,5° betragen dürfen.

Diese Anforderungen erschweren die Ausrichtung eines Lichtvorhangs erheblich.

Die DE 10 2006 050 189 B4 betrifft ein Lichtgitter mit einer Sendeeinheit und einer Empfangseinheit, wobei die Sendeeinheit eine Vielzahl von Lichtsendern und einen Ausrichtlichtsender aufweist, wobei jedem Lichtsender ein Lichtempfänger der Empfangseinheit zugeordnet ist, der auf von einem Lichtsender ausgesandtes Gitterlicht anspricht, wenn der Lichtempfänger innerhalb eines ersten Abstrahlwinkels zu dem Lichtsender und der Lichtsender innerhalb eines ersten Sichtwinkels zu dem Lichtempfänger ausgerichtet ist. Die Empfangseinheit weist einen Ausrichtlichtempfänger auf, der auf Ausrichtlicht anspricht, wenn der Ausrichtlichtempfänger innerhalb eines zweiten Abstrahlwinkels zu dem Ausrichtlichtsender und der Ausrichtlichtsender innerhalb eines zweiten Sichtwinkels zu dem Ausrichtlichtempfänger ausgerichtet ist. Der zweite Abstrahlwinkel ist größer als der erste Abstrahlwinkel. Alternativ oder zusätzlich ist der zweite Sichtwinkel größer als der erste Sichtwinkel. Eine Steuerung des 3

Lichtgitters ist dafür ausgebildet, im Betrieb zur Bewertung in einer Überwachungsfunktion des Lichtgitters, ob ein Warnsignal erzeugt werden soll oder nicht, den Unterbrechungszustand des Ausrichtlichtstrahls zwischen Ausrichtlichtsender und Ausrichtlichtempfänger unberücksichtigt zu lassen.

Die EP 2 985 636 A1 betrifft ein Verfahren zum Ausrichten einer Sensoreinrichtung, welche eine Sendereinheit mit wenigstens einem Lichtstrahlen emittierenden Sender und eine Empfängereinheit mit wenigstens einem, dem Sender zugeordneten Empfänger aufweist, welcher in einem Arbeitsbetrieb der Sensoreinrichtung die Lichtstrahlen des Senders empfängt. Zum Ausrichten der Sendereinheit wird auf die Empfängereinheit vor dem Empfänger ein Ausrichtempfänger platziert, welcher einen größeren Öffnungswinkel als der Empfänger aufweist. Mit dem Ausrichtempfänger werden die vom Sender emittierten Lichtstrahlen empfangen. Abhängig von der am Ausrichtempfänger empfangenen Lichtmenge der Lichtstrahlen erfolgt mit einer Anzeigeeinheit eine Anzeige.

Die DE 10 2007 023 101 A1 betrifft eine optoelektronische Sensoranordnung mit mehreren in einer Lichtsenderleiste nebeneinander angeordneten Lichtsendern, welche jeweils Licht in einen Sendekegel in einen Überwachungsbereich abstrahlen, und mit mehreren in einer Lichtempfängerleiste nebeneinander angeordneten Lichtempfängern, welche Licht aus einem Empfangskegel aus dem Überwachungsbereich aufnehmen und welche jeweils ein ortsauflösendes Element aufweisen, wobei jeweils ein Lichtsender mit einem Lichtempfänger ein Lichtsender/Lichtempfängerpaar bildet, wobei eine Steuereinheit vorhanden ist, in welcher Mittel zur Bestimmung des Lichtauftreffpunktes des Sendekegels jeweils eines der Lichtsender und/oder einer Fremdlichtquelle auf einem der Lichtempfänger vorhanden sind.

Die EP 0 964 273 A2 betrifft ein Lichtgitter mit einer Sendereinheit und einer Empfängereinheit an gegenüberliegenden Rändern eines Überwachungsbereichs. In der Sendereinheit befindet sich eine Reihenanordnung von Lichtstrahlen emittierenden Sendern, in der Empfängereinheit befindet sich eine Reihenanordnung von Empfängern. Einige der Empfänger weisen vergrößerte Sichtwinkel auf.

Der Erfindung liegt die Aufgabe zugrunde für einen Lichtvorhang der eingangs genannten Art eine konstruktiv einfache Ausrichtung zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich mit einer in einem Sendergehäuse integrierten Reihenanordnung von Sendern, die jeweils Lichtstrahlen mit einem Abstrahlwinkel emittieren, mit einer in einem Empfängergehäuse integrierten Reihenanordnung von Empfängern, die jeweils innerhalb eines Sichtwinkels Lichtstrahlen empfangen, wobei in einem Arbeitsbetrieb des Lichtvorhangs bei freiem Überwachungsbereich die Lichtstrahlen eines Senders auf einen zugeordneten Empfänger treffen, der mit diesem Sender eine Strahlachse bildet, und mit einer Auswerteeinheit, welche zur Generierung eines Objektfeststellungssignals in Abhängigkeit von Empfangssignalen der Empfänger ausgebildet ist. Als Ausrichtmittel im Empfängergehäuse ist wenigstens ein Ausrichtempfänger vorgesehen, dessen Sichtwinkel größer als die Sichtwinkel der Empfänger ist. Der Ausrichtempfänger ist einem der Empfänger so zugeordnet, das heißt räumlich dicht an diesem angeordnet, dass Lichtstrahlen des diesem Empfänger zugeordneten Senders nicht nur auf den zugeordneten Empfänger, sondern auch auf den Ausrichtempfänger treffen. Der Ausrichtempfänger ist dazu eingerichtet, Lichtstrahlen des diesem Empfänger zugeordneten Senders zu empfangen. Während eines Ausrichtvorgangs ist eine Ausrichtung des Sendergehäuses relativ zum Empfängergehäuse in Abhängigkeit der auf den Ausrichtempfänger auftreffenden Lichtmenge der Lichtstrahlen dieses Senders durchführbar.

Ein wesentlicher Vorteil der Erfindung besteht darin, dass mit dem wenigstens einen Ausrichtempfänger nur empfangsseitig ein Ausrichtmittel erforderlich ist, um den Lichtvorhang zu justieren.

Durch die Anordnung des Ausrichtempfängers dicht an einem Empfänger wird erreicht, dass die Lichtstrahlen des dem Empfänger zugeordneten Senders nicht nur auf diesen Empfänger sondern auch auf den Ausrichtempfänger treffen. Damit wird kein separater Ausrichtsender als zusätzliches Ausrichtmittel benötigt.

Dadurch, dass der Ausrichtempfänger einen größeren, vorzugsweise signifikant größeren Sichtwinkel als die Empfänger aufweist, ist auch bei einer erheblichen Fehlausrichtung des Sendergehäuses zum Empfängergehäuse gewährleistet, dass noch ein Teil der Lichtstrahlen des Senders auf den Ausrichtempfänger trifft.

Die vorzugsweise identisch ausgebildeten Abstrahlwinkel der Sender und die vorzugsweise identisch ausgebildeten Sichtwinkel der Empfänger sind eng begrenzt, um Fehldetektionen, insbesondere bedingt durch Umspiegelungen, zu vermeiden. Die gilt insbesondere dann, wenn der Lichtvorhang ein Sicherheitssensor ist, der im Bereich der Sicherheitstechnik eingesetzt wird. In diesem Fall sind die Abstrahlwinkel als Norm-Abstrahlwinkel und die Sichtwinkel als Norm-Sichtwinkel ausgebildet, das heißt so dimensioniert, dass die Anforderungen für den Einsatz des Lichtvorhangs im Bereich der Sicherheitstechnik erfüllt sind. Diesen Anforderungen entsprechend betragen die Abstrahlwinkel beziehungsweise Sichtwinkel abhängig von der Anwendung zum Beispiel maximal ± 2,5°.

Demgegenüber ist der Sichtwinkel des Ausrichtempfängers erheblich größer und beträgt wenigstens das Zwei- oder Dreifache des Sichtwinkels der Empfänger, wodurch eine einfache Ausrichtung des Lichtvorhangs ermöglicht wird.

Gemäß einer konstruktiv vorteilhaften Ausgestaltung weist der Ausrichtempfänger wenigstens zwei zueinander beabstandete Empfangselemente auf.

Durch die beabstandeten Empfangselemente wird gegenüber den vorzugsweise aus einzelnen Photodioden bestehenden Empfängern ein erheblich vergrößerter Sichtwinkel erhalten.

Gemäß einer vorteilhaften Ausführungsform sind zwei Ausrichtempfänger vorgesehen, die unterschiedlichen Empfängern zugeordnet sind.

Dabei ist zweckmäßig ein erster Ausrichtempfänger in einem oberen Bereich des Empfängergehäuses und der zweite Ausrichtempfänger in einem unteren Bereich des Empfängergehäuses vorgesehen.

Mit den beiden Ausrichtempfängern kann eine verbesserte Justage, insbesondere Ausrichtung des Sendergehäuses zum Empfängergehäuse erzielt werden, da hiermit auch Verdrehungen des Sendergehäuses um Drehachsen quer zu deren Längsachse kompensiert werden.

Vorteilhaft sind die Ausrichtempfänger identisch ausgebildet.

Dadurch werden für beide Ausrichtempfänger entsprechende, vergleichbare Empfangssignale bei der Ausrichtung generiert, was eine reproduzierbare, genaue Justage ermöglicht.

Dabei ist es vorteilhaft, dass die auf den oder jeden Ausrichtempfänger auftreffende Lichtmenge mittels einem Anzeigeelement visualisiert ist.

Somit kann ein Benutzer die Ausrichtung des Sendergehäuses zum Empfängergehäuse visuell einfach kontrollieren. Vorzugsweise ist das Anzeigeelement als analoge Anzeige ausgebildet, das heißt sie variiert abhängig, vorzugsweise proportional, zur auf den jeweiligen Ausrichtempfänger auftreffenden Lichtmenge, so dass der Benutzer an der Anzeige direkt die Güte der Ausrichtung ablesen kann.

Die Ausrichtung des Lichtvorhangs erfolgt generell während eines Ausrichtvorgangs und damit zur Aufnahme des Arbeitsbetriebs, in welchem mit dem Lichtvorhang Objektdetektionen durchgeführt werden.

Während des Ausrichtvorgangs wird zunächst das Sendergehäuse relativ zum Empfängergehäuse ausgerichtet. Hierzu werden der oder die Ausrichtempfänger benötigt, deren Empfangssignale als Maß für die Ausrichtgüte an der oder den Anzeigeelementen visualisiert werden.

Nach dieser Ausrichtung des Sendergehäuses erfolgt eine Ausrichtung des Empfängergehäuses.

Diese Ausrichtung kann einfach durch die Anzeige des Objektfeststellungssignals am Lichtvorhang kontrolliert werden.

Eine korrekte Ausrichtung des Empfängergehäuses ist gegeben, wenn das Objektfeststellungssignal den Signalzustand "freier Überwachungsbereich" einnimmt. Der Signalzustand "freier Überwachungsbereich" des Objektfeststellungssignals ist durch Signalmittel visualisiert.

Die Funktionsweise des Lichtvorhangs ist vorteilhaft derart, dass die Empfangssignale des oder der Ausrichtempfänger nicht zur Generierung des Objektfeststellungssignals beitragen.

Gemäß einer vorteilhaften Ausführungsform sind die Empfänger und die Ausrichtempfänger zyklisch einzeln nacheinander aktiviert.

Zweckmäßig sind hierzu die Empfänger mittels einer Schiebekette angesteuert, welche von einer Rechnereinheit gesteuert sind. Dabei ist die Rechnereinheit Bestandteil der Auswerteeinheit.

Die Sender werden vorteilhaft auch zyklisch einzeln nacheinander aktiviert, wobei die sende- und empfangsseitigen Aktivierungen vorzugsweise auf optischem Weg über wenigstens eine Strahlachse des Lichtvorhangs synchronisiert sind, so dass die Lichtstrahlen eines Senders auf den zugeordneten Empfänger und Ausrichtempfänger dann auftreffen, wenn diese ebenfalls aktiviert sind.

Die Erfindung wird im Folgenden anhand der Zeichnungen erläutert. Es zeigen:
- Figur 1:: Ausführungsbeispiel des erfindungsgemäßen Lichtvorhangs.
- Figur 2:: Frontansicht des Empfängergehäuses des Lichtvorhangs gemäß Figur 1.
- Figur 3:: Querschnittsdarstellung für die Anordnung gemäß Figur 2.
- Figur 4:: Ausführungsform einer Ansteuerung von Empfängern und Ausrichtempfängern für den Lichtvorhang gemäß Figur 1.
- Figur 5:: Schaubild zur Ausrichtung des Lichtvorhangs gemäß Figur 1.

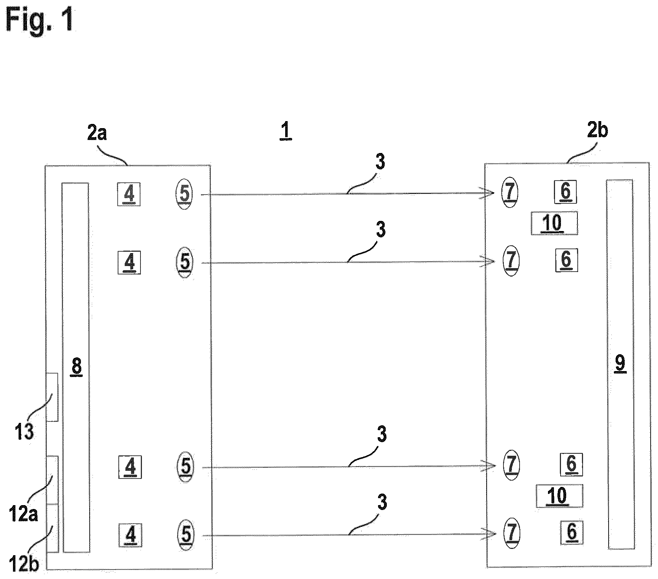

Figur 1 zeigt schematisch den Aufbau eines Ausführungsbeispiels des erfindungsgemäßen Lichtvorhangs 1 zur Erfassung von Objekten innerhalb eines Überwachungsbereichs.

Der Lichtvorhang 1 weist als erstes Gehäuse ein Sendergehäuse 2a mit einer Reihenanordnung von Lichtstrahlen 3 emittierenden Sendern 4 und diesen zugeordneten Sendeoptiken 5 auf. Weiterhin weist der Lichtvorhang 1 als zweites Gehäuse ein Empfängergehäuse 2b mit einer Reihenanordnung von Lichtstrahlen 3 empfangenden Empfängern 6 auf, welchen jeweils eine Empfangsoptik 7 vorgeordnet ist. Die Sender 4 sind von Leuchtdioden gebildet, die Empfänger 6 von einzelnen Photodioden.

Das Sendergehäuse 2a und das Empfängergehäuse 2b sind an gegenüberliegenden Rändern des Überwachungsbereichs so angeordnet, dass jeweils ein Empfänger 6 einem Sender 4 gegenüberliegend angeordnet ist und mit diesem eine Strahlachse bildet. Im vorliegenden Fall sind vier Strahlachsen vorgesehen. Dabei bilden die oberen beiden Strahlachsen ein erstes dicht zusammenliegendes Paar, ebenso die anderen beiden Strahlachsen. Zwischen diesen Paaren ist ein größerer Abstand vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Erfindungsgemäß ist für die Ausrichtung des Lichtvorhangs 1 eine Anordnung von Ausrichtempfängern 10 vorgesehen. Im vorliegenden Fall sind zwei identische Ausrichtempfänger 10 vorgesehen, die zur Ausrichtung des Sendergehäuses 2a relativ zum Empfängergehäuse 2b verwendet werden. Jeder Ausrichtempfänger 10 besteht im vorliegenden Fall aus zwei in Abstand zueinander angeordneten Empfangselementen 11.

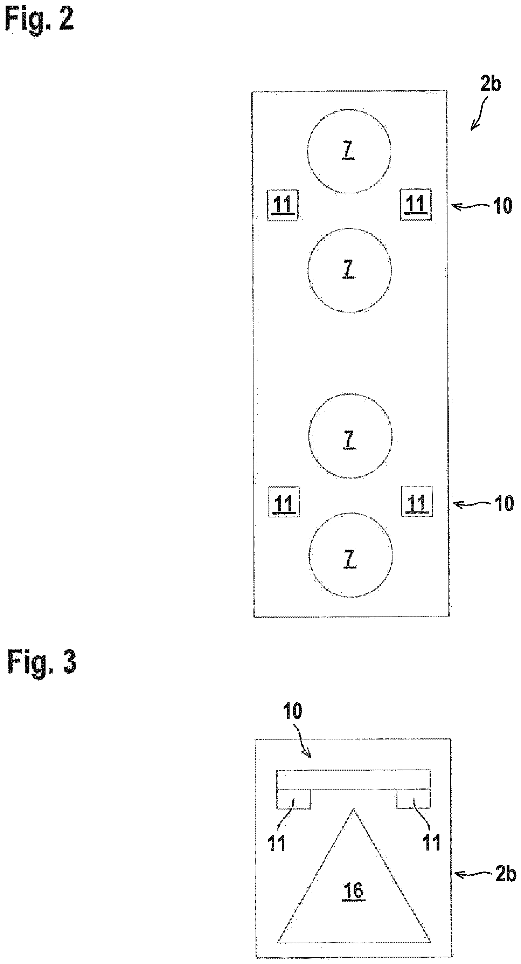

In einer Variante könnte ein einzelnes Empfangselement 11 angeordnet sein. Wie im Beispiel von Figur 2 zum Beispiel diagonal neben einer Empfangsoptik 7. In einer weiteren Variante könnte das einzelne Empfangselement 11 auch zwischen zwei Empfangsoptiken 7 angebracht sein.

Wie die Figuren 1 und 2 zeigen, ist ein erster Ausrichtempfänger 10 zwischen den Empfängern 6 des oberen Strahlachsenpaares und ein zweiter Ausrichtempfänger 10 zwischen den Empfängern 6 des unteren Strahlachsenpaares angeordnet. Generell kann auch ein Ausrichtempfänger 10 nur einem Empfänger 6 zugeordnet sein.

Generell ist der oder jeder Ausrichtempfänger 10 einem Empfänger 6 so zugeordnet, das heißt räumlich dicht an diesem angeordnet, dass die Lichtstrahlen 3 des Senders 4 dieser Strahlachse so nicht nur auf den zugeordneten Empfänger 6 dieser Strahlachse sondern auch auf den Ausrichtempfänger 10 treffen.

Bei der Ausführungsform gemäß Figur 2 ist der obere Ausrichtempfänger 10 auf diese Weise den beiden oberen Empfängern 6 zugeordnet, während der untere Ausrichtempfänger 10 den beiden unteren Empfängern 6 zugeordnet ist.

Die Empfangssignale der Ausrichtempfänger 10 werden jeweils mit einem Anzeigeelement 12a, 12b angezeigt. Die Anzeigeelemente 12a, 12b sind jeweils als optisches Anzeigemittel ausgebildet, das vorzugsweise eine zum jeweiligen Empfangssignal proportionale optische Anzeige generiert.

Weiterhin weist der Lichtvorhang 1 ein Signalmittel 13 zur Anzeige des Schaltzustands des Schaltsignals auf.

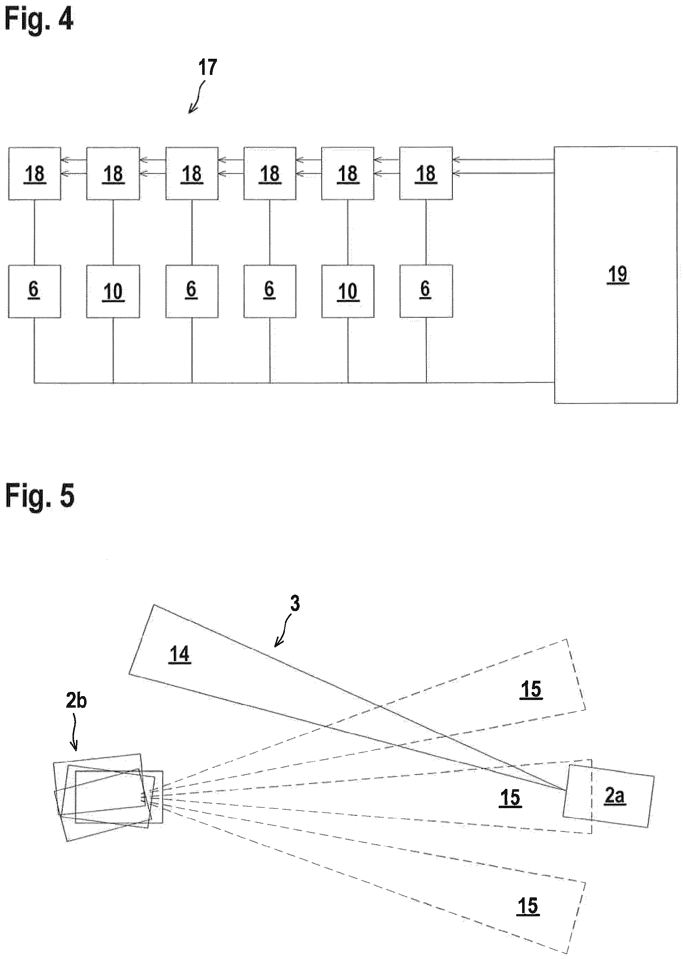

Erfindungsgemäß sind die Abstrahlwinkel 14 der Lichtstrahlen 3 der Sender 4 und die Sichtwinkel 15 der Empfänger 6 eng begrenzt. Vorzugsweise sind diese kleiner als ± 2,5°. Vorzugsweise sind alle Abstrahlwinkel 14 einerseits und alle Sichtwinkel 15 andererseits identisch. Diese sind schematisch in Figur 5 dargestellt. Demgegenüber zeigt j eder Ausrichtempfänger 10 einen erheblich größeren Sichtwinkel 16 auf, der vorzugsweise ein Mehrfaches des Sichtwinkels 15 der Empfänger 6 ist. Dieser Sichtwinkel 16 ist in Figur 3 schematisch dargestellt. Figur 4 zeigt eine Empfängersteuerung für die Empfänger 6 und Ausrichtempfänger 10 des Lichtvorhangs 1.

Die Empfänger 6 und Ausrichtempfänger 10 werden entsprechend ihrer Reihenfolge im Empfängergehäuse 2b zyklisch einzeln nacheinander aktiviert. Hierzu ist eine Schiebekette 17 vorgesehen, die aus einer Reihenanordnung von FlipFlops 18 besteht. Die Schiebekette 17 wird von einer Rechnereinheit 19 gesteuert, die Bestandteil der Ausrichtempfänger 10 ist.

Hieran angepasst erfolgt eine Ansteuerung der Sender 4 derart, dass auch diese, synchronisiert auf den Empfängerbetrieb, zyklisch einzeln nacheinander aktiviert werden.

Erfindungsgemäß werden die Ausrichtempfänger 10 zum Ausrichten des Sendergehäuses 2a und Empfängergehäuses 2b eingesetzt, nicht jedoch zur Detektion von Objekten im Überwachungsbereich während eines Arbeitsbetriebs des Lichtvorhangs 1.

Vor Beginn des Arbeitsbetriebs erfolgt in einem Ausrichtvorgang die Ausrichtung des Lichtvorhangs 1.

Figur 5 zeigt den Anfangszustand, in welchem das Sendergehäuse 2a und das Empfängergehäuse 2b nicht ausgerichtet sind, sondern jeweils vom Drehwinkel um deren in vertikaler Richtung verlaufender Längsachsen verdreht sind. (Figur 5 zeigt die Gehäuse des Lichtvorhangs 1 in einer Draufsicht von oben.)

Wie Figur 5 zeigt, ist das Sendergehäuse 2a gegenüber dem Empfängergehäuse 2b so verdreht, dass die Lichtstrahlen 3 der Sender 4 am Empfängergehäuse 2b vorbeigeführt sind.

In einem ersten Schritt des Ausrichtvorgangs erfolgt die Ausrichtung der Sendergehäuse 2a. Da die Ausrichtempfänger 10 einen großen Sichtwinkel 16 aufweisen, werden mit diesem die Lichtstrahlen 3 der zugeordneten Sender 4 teilweise erfasst, sobald beim Schwenken des Sendergehäuses 2a dessen Licht im Abstrahlwinkel 14 den Ausrichtempfänger 10 überstreicht, obwohl das Empfängergehäuse 2b verdreht ist, wie Figur 5 zeigt. Je besser die Ausrichtung, desto mehr Sendelicht fällt auf die Ausrichtempfänger 10, was mit den Anzeigeelementen 12a, 12b angezeigt wird. Die Anzeigeelemente 12a, 12b oder Signalmittel 13 werden von der Auswerteeinheit 9 ermittelt und über Signalleitungen (nicht dargestellt) an das Sendergehäuse 2a übertragen. In einer weiteren Ausführung kann statt über Signalleitungen die Ansteuerung über eine drahtlose (Funk oder Licht) Übertragung vom Empfängergehäuse 2b zum Sendergehäuse 2a erfolgen.

Auf diese Weise kann das Sendergehäuse 2a im ersten Schritt exakt bezüglich des Empfängergehäuses 2b ausgerichtet werden.

Anschließend erfolgt das Ausrichten des Empfängergehäuses 2b. Dessen korrekte Ausrichtung kann einfach dadurch kontrolliert werden, dass die Signalmittel 13 einen freien Überwachungsbereich anzeigen, denn in diesem Fall müssen die Lichtstrahlen 3 aller Sender 4 auf die zugeordneten Empfänger 6 auftreffen.

Die Anzeigeelemente 12a, 12b und Signalmittel 13 können in einer anderen nicht dargestellten Ausgestaltung im Empfängergehäuse 2b angeordnet sein, wobei diese in vorteilhafter Weise so angeordnet sind, dass diese von der Senderseite gut sichtbar sind. Dies ist vorteilhaft, da bei dieser Anordnung keine Signalleitungen für die Anzeigeelemente 12a, 12b oder Signalmittel 13 vom Empfängergehäuse 2b zum Sendergehäuse 2a erforderlich sind.

Nach Beenden des Ausrichtvorgangs beginnt der Arbeitsbetrieb des Lichtvorhangs 1, das heißt die Überwachung des Überwachungsbereichs.

### Bezugszeichenliste

- (1): Lichtvorhang
- (2a): Sendergehäuse
- (2b): Empfängergehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10): Ausrichtempfänger
- (11): Empfangselement
- (12a): Anzeigeelement
- (12b): Anzeigeelement
- (13): Signalmittel
- (14): Ab strahlwinkel
- (15): Sichtwinkel
- (16): Sichtwinkel
- (17): Schiebekette
- (18): Flip-Flop
- (19): Rechnereinheit

## Patentansprüche

1. Lichtvorhang (1) zur Erfassung von Objekten in einem Überwachungsbereich mit einer in einem Sendergehäuse (2a) integrierten Reihenanordnung von Sendern (4), die jeweils Lichtstrahlen (3) mit einem Abstrahlwinkel (14) emittieren, mit einer in einem Empfängergehäuse (2b) integrierten Reihenanordnung von Empfängern (6), die jeweils innerhalb eines Sichtwinkels (15) Lichtstrahlen (3) empfangen, wobei in einem Arbeitsbetrieb des Lichtvorhangs (1) bei freiem Überwachungsbereich die Lichtstrahlen (3) eines Senders (4) auf einen zugeordneten Empfänger (6) treffen, der mit diesem Sender (4) eine Strahlachse bildet, und mit einer Auswerteeinheit (9), welche zur Generierung eines Objektfeststellungssignals in Abhängigkeit von Empfangssignalen der Empfänger (6) ausgebildet ist, wobei in dem Empfängergehäuse als Ausrichtmittel wenigstens ein Ausrichtempfänger (10) vorgesehen ist, dessen Sichtwinkel (16) größer als die Sichtwinkel (15) der Empfänger (6) ist, **dadurch gekennzeichnet, dass** der Ausrichtempfänger (10) einem der Empfänger (6) so zugeordnet, das heißt räumlich dicht an diesem angeordnet ist, dass Lichtstrahlen (3) des diesem Empfänger (6) zugeordneten Senders (4) nicht nur auf den zugeordneten Empfänger (6), sondern auch auf den Ausrichtempfänger (10) treffen und der Ausrichtempfänger (10) dazu eingerichtet ist, Lichtstrahlen (3) des diesem Empfänger (6) zugeordneten Senders (4) zu empfangen, und dass während eines Ausrichtvorgangs eine Ausrichtung des Sendergehäuses (2a) relativ zum Empfängergehäuse (2b) in Abhängigkeit der auf den Ausrichtempfänger (10) auftreffenden Lichtmenge der Lichtstrahlen (3) dieses Senders (4) durchführbar ist.

2. Lichtvorhang (1) nach Anspruch 1, **dadurch gekennzeichnet, dass** dieser ein Sicherheitssensor ist.

3. Lichtvorhang (1) nach einem der Ansprüche 1 oder 2, **dadurch gekennzeichnet, dass** die Abstrahlwinkel (14) für alle Sender (4) identisch sind und die Sichtwinkel (15) für alle Empfänger (6) identisch sind.

4. Lichtvorhang (1) nach Anspruch 3, **dadurch gekennzeichnet, dass** der Abstrahlwinkel (14) der Sender (4) ein Norm-Abstrahlwinkel ist und der Sichtwinkel (15) der Empfänger (6) ein Norm-Sichtwinkel ist.

5. Lichtvorhang (1) nach einem der Ansprüche 1 bis 4, **dadurch gekennzeichnet, dass** der Sichtwinkel (16) des Ausrichtempfängers (10) signifikant größer ist als der Sichtwinkel (15) der Empfänger (6).

6. Lichtvorhang (1) nach einem der Ansprüche 1 bis 5, **dadurch gekennzeichnet, dass** der Ausrichtempfänger (10) wenigstens zwei zueinander beabstandete Empfangselemente (11) aufweist, oder dass zwei Ausrichtempfänger (10) vorgesehen sind, die unterschiedlichen Empfängern (6) zugeordnet sind.

7. Lichtvorhang (1) nach Anspruch 6, **dadurch gekennzeichnet, dass** ein erster Ausrichtempfänger (10) in einem oberen Bereich des Empfängergehäuses (2b) und der zweite Ausrichtempfänger (10) in einem unteren Bereich des Empfängergehäuses (2b) vorgesehen ist.

8. Lichtvorhang (1) nach einem der Ansprüche 6 oder 7, **dadurch gekennzeichnet, dass** die Ausrichtempfänger (10) identisch ausgebildet sind.

9. Lichtvorhang (1) nach einem der Ansprüche 1 bis 8, **dadurch gekennzeichnet, dass** die auf den oder jeden Ausrichtempfänger (10) auftreffende Lichtmenge mittels einem Anzeigeelement (12a, 12b) visualisiert ist.

10. Lichtvorhang (1) nach einem der Ansprüche 1 bis 9, **dadurch gekennzeichnet, dass** nach der Ausrichtung des Sendergehäuses (2a) eine Ausrichtung des Empfängergehäuses (2b) durchführbar ist.

11. Lichtvorhang (1) nach Anspruch 10, **dadurch gekennzeichnet, dass** eine korrekte Ausrichtung des Empfängergehäuses (2b) gegeben ist, wenn das Objektfeststellungssignal den Signalzustand "freier Überwachungsbereich" einnimmt, wobei der Signalzustand "freier Überwachungsbereich" des Objektfeststellungssignals durch Signalmittel (13) visualisiert ist.

12. Lichtvorhang (1) nach einem der Ansprüche 1 bis 11, **dadurch gekennzeichnet, dass** die Empfangssignale des oder der Ausrichtempfänger (10) nicht zur Generierung des Objektfeststellungssignals beitragen.

13. Lichtvorhang (1) nach einem der Ansprüche 1 bis 12, **dadurch gekennzeichnet, dass** die Empfänger (6) und die Ausrichtempfänger (10) zyklisch einzeln nacheinander aktiviert sind.

14. Lichtvorhang (1) nach Anspruch 13, **dadurch gekennzeichnet, dass** die Empfänger (6) mittels einer Schiebekette (17) angesteuert sind, welche von einer Rechnereinheit (19) gesteuert ist.

15. Lichtvorhang (1) nach Anspruch 14, **dadurch gekennzeichnet, dass** die Rechnereinheit (19) Bestandteil der Auswerteeinheit (9) ist.

## Claims

1. A light curtain (1) for detecting objects in a surveillance area with a series arrangement of transmitters (4) integrated in a transmitter housing (2a), each of which emits light beams (3) with a beam angle (14), with a series arrangement of receivers (6) integrated in a receiver housing (2b), each of which receives light beams (3) within a viewing angle (15), the light beams (3) of a transmitter (4) striking an associated receiver (6), which forms a beam axis with this transmitter (4), in a working mode of the light curtain (1) when the surveillance area is free, and having an evaluation unit (9) which is designed to generate an object detection signal as a function of received signals from the receivers (6), at least one alignment receiver (10) being provided in the receiver housing as alignment means, whose viewing angle (16) is greater than the viewing angles (15) of the receivers (6), **characterised in that** the alignment receiver (10) is assigned to one of the receivers (6), i.e. is arranged spatially close to the latter, in such a way that light beams (3) from the transmitter (4) assigned to this receiver (6) are directed not only onto the assigned receiver (6) but also onto the alignment receiver (10), but also on the alignment receiver (10) and the alignment receiver (10) is set up to receive light beams (3) from the transmitter (4) assigned to this receiver (6), and **in that** during an alignment process an alignment of the transmitter housing (2a) relative to the receiver housing (2b) can be carried out as a function of the quantity of light from the light beams (3) from this transmitter (4) incident on the alignment receiver (10).

2. A light curtain (1) according to claim 1, **characterised in that** this is a safety sensor.

3. A light curtain (1) according to one of claims 1 or 2, **characterised in that** the beam angles (14) are identical for all transmitters (4) and the viewing angles (15) are identical for all receivers (6).

4. A light curtain (1) according to claim 3, **characterised in that** the beam angle (14) of the transmitters (4) is a standard beam angle and the viewing angle (15) of the receivers (6) is a standard viewing angle.

5. A light curtain (1) according to one of claims 1 to 4, **characterised in that** the viewing angle (16) of the alignment receiver (10) is significantly greater than the viewing angle (15) of the receivers (6).

6. A light curtain (1) according to one of claims 1 to 5, **characterised in that** the alignment receiver (10) has at least two receiver elements (11) which are spaced apart from one another, or **in that** two alignment receivers (10) are provided which are assigned to different receivers (6).

7. A light curtain (1) according to claim 6, **characterised in that** a first alignment receiver (10) is provided in an upper region of the receiver housing (2b) and the second alignment receiver (10) is provided in a lower region of the receiver housing (2b).

8. A light curtain (1) according to one of claims 6 or 7, **characterised in that** the alignment receivers (10) are of identical design.

9. A light curtain (1) according to one of claims 1 to 8, **characterised in that** the amount of light impinging on the or each alignment receiver (10) is visualised by means of a display element (12a, 12b).

10. A light curtain (1) according to one of claims 1 to 9, **characterised in that** an alignment of the receiver housing (2b) can be carried out after the alignment of the transmitter housing (2a).

11. A light curtain (1) according to claim 10, **characterised in that** a correct alignment of the receiver housing (2b) is given when the object detection signal assumes the signal state "free surveillance range", wherein the signal state "free surveillance range" of the object detection signal is visualised by signal means (13).

12. A light curtain (1) according to one of claims 1 to 11, **characterised in that** the received signals of the alignment receiver or alignment receivers (10) do not contribute to the generation of the object detection signal.

13. A light curtain (1) according to one of claims 1 to 12, **characterised in that** the receivers (6) and the alignment receivers (10) are activated cyclically one after the other.

14. A light curtain (1) according to claim 13, **characterised in that** the receivers (6) are controlled by means of a sliding chain (17), which is controlled by a computer unit (19).

15. A light curtain (1) according to claim 14, **characterised in that** the computer unit (19) is part of the evaluation unit (9).

## Revendications

1. Rideau lumineux (1) pour la détection d'objets dans une zone de surveillance avec une série d'émetteurs (4) intégrés dans un boîtier émetteur (2a), chacun émettant des faisceaux lumineux (3) avec un angle de rayonnement (14), avec une série de récepteurs (6) intégrés dans un boîtier récepteur (2b), chacun recevant des faisceaux lumineux (3) dans un angle de vision (15), les faisceaux lumineux (3) d'un émetteur (4) frappant un récepteur associé (6), qui forme un axe de rayonnement avec cet émetteur (4), dans un mode de fonctionnement du rideau lumineux (1) lorsque la zone de surveillance est libre, et ayant une unité d'évaluation (9) conçue pour générer un signal de détection d'objet en fonction des signaux reçus des récepteurs (6), au moins un récepteur d'alignement (10) étant prévu dans le boîtier du récepteur comme moyen d'alignement, dont l'angle de vision (16) est supérieur aux angles de vision (15) des récepteurs (6),
**caractérisé en ce que** le récepteur d'alignement (10) est affecté à l'un des récepteurs (6), c'est-à-dire au récepteur d'alignement (10), à l'émetteur (4) et au récepteur (6), et **en ce que** le récepteur d'alignement (10) est affecté à l'un des récepteurs (6), c'est-à-dire à l'un des récepteurs (6) et est disposé à proximité de ce dernier, de telle sorte que les faisceaux lumineux (3) provenant de l'émetteur (4) affecté à ce récepteur (6) sont dirigés non seulement sur le récepteur affecté (6) mais aussi sur le récepteur d'alignement (10), mais aussi sur le récepteur d'alignement (10) et que le récepteur d'alignement (10) est configuré pour recevoir les faisceaux lumineux (3) provenant de l'émetteur (4) affecté à ce récepteur (6), et **en ce que**, au cours d'un processus d'alignement, un alignement du boîtier de l'émetteur (2a) par rapport au boîtier du récepteur (2b) peut être effectué en fonction de la quantité de lumière provenant des faisceaux lumineux (3) de cet émetteur (4) et arrivant sur le récepteur d'alignement (10).

2. Rideau lumineux (1) selon la revendication 1, **caractérisé par le fait qu'**il s'agit d'un

3. Rideau lumineux (1) selon l'une des revendications 1 ou 2, **caractérisé en ce que** les angles de rayonnement (14) sont identiques pour tous les émetteurs (4) et les angles de vision (15) sont identiques pour tous les récepteurs (6).

4. Rideau lumineux (1) selon la revendication 3, **caractérisé par le fait que** l'angle de rayonnement (14) des émetteurs (4) est un angle de rayonnement standard et que l'angle de vision (15) des récepteurs (6) est un angle de vision standard.

5. Rideau lumineux (1) selon l'une des revendications 1 à 4, **caractérisé par le fait que** l'angle de vision (16) du récepteur d'alignement (10) est sensiblement supérieur à l'angle de vision (15) des récepteurs (6).

6. Rideau lumineux (1) selon l'une des revendications 1 à 5, **caractérisé par le fait que** le récepteur d'alignement (10) comporte au moins deux éléments récepteurs (11) espacés l'un de l'autre, ou **par le fait que** deux récepteurs d'alignement (10) sont prévus et affectés à différents récepteurs (6).

7. Rideau lumineux (1) selon la revendication 6, **caractérisé en ce qu'**un premier récepteur d'alignement (10) est prévu dans une zone supérieure du boîtier du récepteur (2b) et le second récepteur d'alignement (10) est prévu dans une zone inférieure du boîtier du récepteur (2b).

8. Rideau lumineux (1) selon l'une des revendications 6 ou 7, **caractérisé par le fait que** les récepteurs d'alignement (10) sont de conception identique.

9. Rideau lumineux (1) selon l'une des revendications 1 à 8, **caractérisé par le fait que** la quantité de lumière arrivant sur le ou chaque récepteur d'alignement (10) est visualisée au moyen d'un élément d'affichage (12a, 12b).

10. Rideau lumineux (1) selon l'une des revendications 1 à 9, **caractérisé par le fait que** l'alignement du boîtier du récepteur (2b) peut être effectué après l'alignement du boîtier de l'émetteur (2a).

11. Rideau lumineux (1) selon la revendication 10, **caractérisé par le fait qu'**un alignement correct du boîtier récepteur (2b) est donné lorsque le signal de détection d'objet prend l'état de signal "portée de surveillance libre", l'état de signal "portée de surveillance libre" du signal de détection d'objet étant visualisé par les moyens de signalisation (13).

12. Rideau lumineux (1) selon l'une des revendications 1 à 11, **caractérisé par le fait que** les signaux reçus du ou des récepteurs d'alignement (10) ne contribuent pas à la génération du signal de détection d'objet.

13. Rideau lumineux (1) selon l'une des revendications 1 à 12, **caractérisé par le fait que** les récepteurs (6) et les récepteurs d'alignement (10) sont activés cycliquement l'un après l'autre.

14. Rideau lumineux (1) selon la revendication 13, **caractérisé en ce que** les récepteurs (6) sont commandés au moyen d'une chaîne coulissante (17), qui est commandée par une unité informatique (19).

15. Rideau lumineux (1) selon la revendication 14, **caractérisé par le fait que** l'unité informatique (19) fait partie de l'unité d'évaluation (9).
